# EUROPEAN PATENT APPLICATION

(11) **EP 4 606 284 A1**
(43) Date of publication of application: **27.08.2025**
(21) Application number: 24382202.0
(22) Date of filing: 23.02.2024
(51) Int. Cl.: A47J 44/00, G07F 17/00

(54) **SYSTEMS AND METHODS FOR HEATING FOOD AND OPENING A BAG**

(71) Applicant: Fundación Tecnalia Research & Innovation, 20009 Donostia - San Sebastián (ES)
(72) Inventor: OYARZABAL, Arkaitz, 20009 Donostia-San Sebastián (ES); ANTERO, Unai, 20009 Donostia-San Sebastián (ES); OUTÓN, Jose Luis, 20009 Donostia-San Sebastián (ES); MUÑOZ, Irati, 20009 Donostia-San Sebastián (ES)
(74) Representative: Balder IP Law, S.L.

(57) **Abstract**

The disclosure relates to a system (1) comprising:
- a closed bag (8) containing food;
- a first holding device (91) for holding the closed bag (8), the first holding device (91) being attachable to the closed bag (8);
- a heater (4) for heating the food while the food is inside the closed bag (8);
- transporting means (3) configured to move, by moving the first holding device (91), the closed bag (8) from a first location to the heater (4), and from the heater (4) to an opening location for opening the bag; and
- an opening device configured to open the bag (8) at the opening location.

The disclosure also relates to a method for heating food and opening a bag.

## Description

### TECHNICAL FIELD

The present disclosure is encompassed within the field of systems and methods for heating food contained in a closed bag and for opening the bag.

### BACKGROUND

Systems for cooking are already known in the art. Some of the systems for cooking known in the art involve manual tasks performed by a cook. The requirement for a cook may be undesirable because a cook may be more expensive than desired and may make mistakes (e.g., using inappropriate ingredients, wrong cooking time and lack of appropriate cleaning of cooking utensils) in the cooking process and it may be difficult for a cook to manually replicate a dish in a precise manner.

Systems comprising machines which minimize the requirement for a cook (i.e., the requirement for manual tasks) in the cooking process have been developed. However, some of these systems present one or more of the following limitations:
- cooking capabilities of the system are limited to just a few cooking recipes which, in some cases, cannot be simultaneously prepared;
- merely automate replication of the each of the steps manually performed by a cook (e.g., pouring water into a pot, introducing noodles into the pot, stirring the water with the noodles by using a spoon);
- food cooking may require longer than desirable;
- to ensure that consumers do not wait more than desirable since ordering the food until getting the ready-to-eat food, an estimation of food demand may be calculated and prepared in advance; however, said estimations may not be accurate enough, resulting in excess food waste or not properly satisfying food demand;
- food handling, by the systems, may be limited to just certain types of food because different types of food have different sizes, different viscosity, different shapes, different strength and/or different mass uniformity; and
- food handling, by the systems, may cause contamination of a certain type of food with another type of food (e.g., because cooking utensils have not been properly cleaned and/or used), which cause that the food has other flavor than desired or even health issues to, e.g., consumers having allergy to certain types of food, consumers affected by celiac disease and lactose intolerants.

Therefore, a system that minimizes the aforementioned disadvantages may be desirable.

### SUMMARY

A first aspect of the disclosure relates to a system comprising:
- a closed bag containing food;
- a first holding device for holding the closed bag, the first holding device being attachable to the closed bag;
- a heater for heating the food while the food is inside the closed bag;
- transporting means configured to move, by moving the first holding device, the closed bag from a first location to the heater, and from the heater to an opening location for opening the bag; and
- an opening device configured to open the bag at the opening location.

The use of a closed bag for moving the food, first to the heater, and then to the opening location is advantageous for several reasons. Firstly, the use of a bag allows disregarding variable features of the food which have an impact on the handling of the food, such as, density, strength or slipperiness. The bag can be moved in a similar manner regardless of the type of food contained in the bag.

Secondly, the use of a closed bag in the heater allows that several closed bags (e.g., each bag containing different food types) be simultaneously or subsequently placed in the same heater without risking that the food contained by a bag is contaminated with food from another bag and without requiring a relatively high degree of cleaning of the heater prior to heating more bags with the heater (e.g., prior to inserting more bags in the heater).

In addition, the system allows heating different types of food in the heater since the bag can contain a relatively broad range of food types.

Moreover, the system requires a relatively low degree of cleaning. The closed bag prevents the food from going out of the closed bag so that, until opening the bag, food does not leave the bag and hence does not make other components of the system (e.g., the heater, the transporting means and the opening device) dirty and does not contaminate other food.

In some embodiments, the system is configured to provide food from the bag to a receptacle after opening the device with the opening device.

In some embodiments, the system comprises a second holding device for holding the open bag.

Therefore, the system comprises a first holding device which is used for holding the closed bag; and a second holding device for holding the open bag. A use of several holding devices allows using a first holding device designed to simplify movement of the bag to the heater and to the opening location (e.g., by using a first holding device appropriate for performing said movements) and using a second holding device designed to facilitate opening of the bag and subsequent handling of the open bag for providing the food, for example, to a receptacle.

Heating the food enables that the food reaches a temperature appropriate to be eaten by a human and, with some foods, enable cooking the food. Thereby, the system allows providing food ready to be served.

By opening the bag, the system facilitates moving the food from the bag to a receptacle (e.g., a receptacle from which food can be eaten more comfortably than from the bag).

In some embodiments, the system comprises a rotating device for rotating the open bag; and the system is configured to rotate the open bag, with the rotating device, while the second holding device is holding the bag.

By rotating the open bag, food can be extracted from the open bag through an opening of the bag. Using a second holding device while the rotation is performed allows performing food extraction while minimizing contamination with food of the bag of other components of the system.

In some embodiments, the closed bag is closed in an airtight manner, and the food contained in the closed bag is in vacuum.

In this way, food kept under vacuum last longer without expiring. Therefore, it may be advantageous to store the food in vacuum.

In addition, the system takes advantage of a cooking technique known a "sous vide" since, like the "sous vide" technique, the present system may use a closed bag containing food in vacuum, and the food may be subsequently heated by submerging the bag in water which is hot but not as hot as a temperature of traditional cooking. "Sous vide" cooking allows heating (e.g., cooking) food in a more spatially uniform manner and at a relatively low temperature thereby allowing minimizing distortion of original properties of the food (e.g., texture and/or flavor of the food).

In some embodiments, the system comprises holding means for holding a portion of the bag located above a food-containing portion of the bag.

The holding means allow holding said portion of the bag for moving the bag and/or for moving said portion of the bag (e.g., to a waste container) after opening (e.g., cutting) the bag.

In some embodiments, the first holding device comprises the holding means.

In some embodiments, the holding means is not comprised by the first holding device.

In some embodiments, the first holding device is a hanger. This allows simplifying movement of the bag from the first location to the opening location as well as attachment of the first holding device to the bag.

In some embodiments, the system comprises a frame for the bag, the frame being attached to the bag. Bags containing vacuum may be particularly prone to bending upon applying vacuum to the bag. Said bending may make it more difficult to handle the bag by the system (e.g., because it may cause unpredictability on the dimensions and location of the portions of the bag). Providing a frame for the bag allows minimizing and/or enhancing control over the bending of the bag.

In some embodiments, the system comprises means for attaching the first holding device to the frame. Thereby, the system may enable that movement of the first holding device causes movement of the bag by attaching the first holding device to the frame.

In some embodiments, the first holding device is attached to a portion of the frame located above the food-containing portion of the bag, and/or the first holding device is directly attached to a portion of the bag located above the food-containing portion of the bag. Using a first holding device attached to said portion(s) has proved advantageous to simplify moving the bag to the heater and to open the bag. In particular, the first holding device allows introducing the bag into a heater by lowering the bag, so that a lowermost portion of the bag is firstly introduced into the heater and, subsequently, portions of the bag located gradually (i.e., as the bag is introduced onto the heater) farther from the lowermost portions are introduced into the heater. In this manner, since the first holding device is above the food within the bag, it is possible to introduce the food-containing portion of the bag (i.e., the portion of the bag containing food) without introducing the first-holding device into the heater, so that, e.g., the first holding device is easily accessible for subsequent removal (e.g., by raising the first holding device with the transporting means) of the bag from the heater.

In addition, placing the first holding device above the food allows letting a portion of the bag located below the first holding device free from the first holding device, so that the second holding device may be attached to the portion of the bag located below the first holding device without interfering with the first holding device.

In some embodiments, the first holding device (e.g., the hanger) comprises a pressing device configured for pressing a portion of the closed bag above a food-containing portion of the bag. For example, the pressing device may comprise two plates and may be configured to press each of the two plates against the other plate while the bag is between the plates. Thereby, the bag may be attached to the first holding device.

In some embodiments, the opening device is a cutting device comprising a blade for cutting the closed bag.

Cutting the closed bag allows opening the bag (i.e., generating an opening of the bag) for providing the food.

In some embodiments, the system is configured to, when holding the bag with the first holding device at the opening location, leave a cuttable portion of the bag uncovered for being cut with the blade.

By attaching the first holding device to a portion of the closed bag located above the food-containing portion of the bag and leaving the cuttable portion of the closed bag uncovered, it is possible to cut the cuttable portion of the bag, which does not contain food (i.e., all the food contained by the bag is below the portion to be cut). Thereby, upon cutting the cuttable portion of the bag left uncovered, it is possible to open the bag without contaminating the blade with food and without causing that food leaves the bag immediately after cutting the bag.

In some embodiments, the heater comprises water at a temperature of at least 80°C and at most 100°C and openings above the water, wherein the bag has dimensions such that the bag can be introduced in the water through any one of the openings; each opening of the openings preferably having a width of at least 0.05 m and at most 0.60 m and a thickness of at least 0.01 m and at most 0.10 m.

Thereby, a bag can be introduced in any one of the openings, and several bags can be heated simultaneously by the water by introducing each bag in an opening (e.g., introducing each bag in a different opening). In addition, providing different openings instead of one bigger opening may be advantageous for decreasing heat dissipated from the hot water to the environment through the opening(s) since thermal resistance may be increased in this manner.

The openings connect the water with an outside of the heater.

Openings having a width of between 0.05 m and 0.60 m and a thickness of between 0.01 m and 0.10 m, allow introducing bags having a width lower than the width of the respective opening and a thickness lower than the thickness of the respective opening. The indicated dimensions are appropriate for providing a suitable amount of food for a meal of an adult human without requiring a bag having a too great height (e.g., which may require more time to extract the food from the bag) and without requiring a bag which is too wide (e.g., too wide to be able to directly provide the food from the bag to a receptacle suitable for consumption, by a human, of food directly from the receptacle; e.g., to provide the food to a bowl having a diameter of at most 0.50 m).

In some embodiments, the frame has width of at least 0.05 m and at most 0.60 m, and a height of at least 0.04 and at most 0.40.

The width of an opening of the heater is a dimension of the opening of the heater perpendicular to the thickness of the opening of the heater and to a height of the heater. The thickness of an opening of the heater is a dimension of the opening of the heater perpendicular to the height of the heater. The height of the heater is a dimension extending from the opening of the heater to a bottom of the heater.

In some embodiments, the temperature of the hot water is of at least 90°C and at most 100°C, more preferably of at least 95°C and at most 100°C. A higher temperature of the water allows heating the food quicker.

In some embodiments, the system comprises drying means for drying the bag; and the transporting means are configured to move the bag from the heater to the drying means and from the drying means to the opening location.

In some embodiments, the drying means comprise a blower configured to blow a gas (e.g., air) against an outer surface of the bag.

After leaving the hot water, an outer surface of the bag may be wet (i.e., water may be on said surface) which may cause that the food undesirably mixes with said water upon providing the food to a receptacle by rotating the bag (i.e., the water may fall from the outer surface to the same receptacle as the food). Drying the outer surface of the bag (e.g., after moving the bag out of the water of the heater) is advantageous for minimizing said amount of water falling from an outer surface of the bag and mixed with the food provided from the bag.

In some embodiments, the system comprises a storage for storing the first holding device, wherein the transporting means are configured to move the first holding device from the opening location to the storage for storing the first holding device.

In some embodiments, upon opening the bag, the portion of the bag held by the holding means is separated from the rest of the bag. If the first holding device is attached to the bag only through the holding means, then the first holding device does not hold the open bag (merely holds the portion of the bag held by the holding means). Therefore, the holding means and/or first holding device may be moved to the container for the holding means and/or the first holding device for subsequent processing of the holding means and/or the first holding device (e.g., by removing portions of cut bag from the holding means and/or by cleaning the holding means and/or first holding device). In this way, the holding means and/or the first holding device may be reused with a different bag (e.g., the holding means and/or the first holding device may be attached to another bag for holding the another bag).

In some embodiments, the closed bag comprises a food-containing portion (i.e., a portion of the bag wherein the portion of the bag contains food), the food-containing portion being delimited by:
- a first portion of the closed bag, the first portion comprising an upper portion of the closed bag attachable to the holding means for holding a portion of the bag located above the food-containing portion of the bag;
- a second portion of the bag located opposite to the first portion of the closed bag;
- a third side-portion of the bag between the first portion of the closed bag and the second portion of the bag; and
- a fourth side-portion of the bag located opposite to the third side-portion of the bag and between the first portion of the closed bag and the second portion of the bag.

In some embodiments, the second holding device comprises tabs for holding at least two of the second portion, the third side-portion and the fourth side-portion of the bag between the tabs by pressing the respective portions of the bag with the tabs.

The width of the bag is a dimension of the bag extending in a direction from the third-side portion of the bag to the fourth-side portion of the bag. The height of the bag is a dimension of the bag extending in a direction from the first portion of the bag to the second portion of the bag. The thickness of the bag is a dimension of the bag extending in a direction perpendicular to the height of the bag and to the width of the bag.

In some embodiments, the frame is in contact with at least two of the second portion, the third side-portion and the fourth side-portion of the bag. In some embodiments, the frame is in contact with the second portion, the third side-portion and the fourth side-portion of the bag. A frame contacting more sides of the bag enhances control or reduction of the bending od the bag.

In some embodiments, the frame comprises plates; and the second portion, the third-side portion and the fourth-side portion of the bag are placed between the plates and pressed by the plates.

In some embodiments, a lowermost portion (lowermost in the direction of the height of the bag) of at least one of the plates of the frame pressing the second portion of the bag has a U-shaped cross-section (i.e., a cross section resulting from cutting the at least one of the plates with a plane perpendicular to a width of the bag provided with the frame). The U-shaped cross-section matches better a common bending of a bag containing vacuum. Thereby, it is more convenient than other shapes (e.g., a planar plate) because, e.g., makes it easier to apply the frame to the bag.

In some embodiments, a width of the food-containing portion of the bag at a location closer to the second side of the bag than to the first side of the bag is greater than the height of the food containing portion of the bag. Thereby, the food travels a shorter length for exiting from the bag than if the height of the food-containing portion were greater. This shorter length allows decreasing likelihood of food being blocked in the bag in its passage from the bag to the receptacle.

A second holding device comprising the first tabs and the second tabs allows holding the bag in an upright position as well as in a rotated position of the bag.

Attaching the first tabs and the second tabs of the second holding device to portions of the bag (e.g., to portions of the frame of the bag) located outside of the food-containing portion of the bag, allows access to portions of the bag covering the food so that, for example, the portions of the bag covering the food may be squeezed to force the food to exit from the bag.

In some embodiments, the bag comprises only one portion for containing food (hence the bag does not comprise more than one food-containing portion).

In some embodiments, the system is configured to attach the second holding device to the bag after moving the bag to the opening location and prior to opening the bag, and to keep the second holding device attached to the bag at least until food contained in the bag has been provided out of the bag (e.g., upon completing a rotation of the bag performed by rotating means). Thereby, the second holding device holds the bag while the bag is being opened (e.g., cut) and while food is being provided out of the bag.

In some embodiments, the system is configured to attach the second holding device to the bag by: attaching the first tabs to the third side-portion of the bag (and/or to plates of the frame in contact with the third side-portion of the bag) and attaching the second tabs to the fourth side-portion of the bag (and/or to plates of the frame in contact with the fourth side-portion of the bag). Thereby, stability of the holding of the bag after opening the bag may be enhanced.

In some embodiments, the first tabs comprise at least four contact points with the bag (and/or with the frame), two first contact points located closer to the opening of the bag than to the second portion of the bag, and other two first contact points located closer to the second portion of the bag than to the opening of the bag; and/or the second tabs comprise at least four contact points, two contact points located closer to the opening of the bag than to the second portion of the bag, and other two contact points located closer to the second portion of the bag than to the opening of the bag. Thereby, by increasing the number of contact points and appropriately arranging the contact points, stability of the holding of the bag after cutting the bag may be further enhanced.

In some embodiments, the system comprises a receptacle, and the system is configured to provide the food from the bag to the receptacle at a provision location of the bag. Thereby, food is extracted from the bag at the provision location of the bag.

In some embodiments, the rotating device is configured to rotate the open bag (e.g., from the opening location of the bag) to the provision location; wherein, upon rotation of the bag to the provision location, an opening of the bag is below the second portion of the bag. Placing the opening of the bag below the second portion of the bag (i.e., placing the opening of the bag below a bottom of the food-containing portion of the bag) cause that gravity may aid in the extraction of the food from the bag, and also to achieve a clean extraction of the food from the bag (e.g., an amount of dirt falling on the outer surface of the bag due to extraction of the food from the bag is minimized).

In some embodiments, the receptacle comprises an opening for receiving the food from the bag, the opening of the receptacle having a width greater than a width of an opening of the bag, and the opening of the receptacle having a thickness greater than a thickness of the opening of the bag. Providing a bag having an opening with the mentioned size relative to the size of the receptacle allows minimizing amount of food which is provided outside of the receptacle upon providing food from the bag to the receptacle (e.g., completely preventing that food is provided outside of the receptacle upon providing food from the bag to the receptacle).

The width of the opening of the receptacle is a dimension of the opening of the receptacle extending in a direction perpendicular to the thickness of the opening of the receptacle and to the depth of the receptacle. The depth of the receptacle is a dimension of the receptacle extending from the opening of the receptacle to a bottom of the receptacle. The thickness of the opening of the receptacle is a dimension of the opening of the receptacle extending perpendicular to the width of the receptacle and to the depth of the receptacle.

In some embodiments, the food-containing portion of the bag is substantially trapezoid-shaped, wherein a length of a side of the trapezoid shape closest to the second side of the bag is greater than a length of a side of the trapezoid shape closest to the opening. Reducing the width of the opening of the bag compared to the width of a portion of the food-containing portion closer to the second side of the bag allows storing a relatively large amount of food in the food containing portion while adjusting a size of the opening of the bag to a size of the opening of a receptacle, so that food provided from the bag to the receptacle and falling outside of the receptacle is minimized (e.g., prevented).

In some embodiments, the opening of the receptacle has a shape being substantially a shape of a circumference. A receptacle having said shape may facilitate placement of the receptacle relative to the bag, for receiving food from the bag, because of the symmetry of the circumference.

In some embodiments, the system comprises a pushing device, and the system is configured to, at the same time, squeeze, with the pushing device, the food-containing portion of the bag and move the pushing device in a direction from the second portion of the bag to an opening of the bag. Squeezing the bag in the mentioned direction causes that food contained in the bag is provided through the opening of the bag.

Thereby, the system may be configured to, upon moving the bag to the provision location, move the pushing device, in the direction from the second portion of the bag to the opening of the bag, while squeezing the food-containing portion of the bag.

In some embodiments, the system comprises a waste container for the bag. Once food has been extracted from the open bag, the open bag may be moved (e.g. may fall) to a waste container.

In some embodiments, the waste container is located below the provision location of the bag, the provision location being for providing the food from the bag to a receptacle.

Locating the waste container below the bag when the bag is in the provision location may facilitate movement of the bag to the waste container. For example, the bag may be moved to the container by letting the bag fall from second holding device (i.e., by releasing the bag from the second holding device). In addition, since the bag may still contain food leftovers (i.e., food which has not been extracted from the bag), it may be desirable to decrease a length of movement of the bag from the provision location to the waste container to minimize likelihood of depositing food (i.e., dirt) in other components of the system.

In some embodiments, the system comprises a storage, bags and cooling means, wherein the storage stores the bags, wherein each bag contains food, and wherein the cooling means are configured to keep a temperature of at least -30 °C and at most 0 °C within the storage.

Keeping the bags in a storage at such temperature allows delaying food expiration while recovering, upon the heating of the food, a relatively large amount of properties of the food at the beginning of storing the food in the storage.

In some embodiments, each bag stored in the storage is held by a first holding device. Thereby, each bag is already attached to a first holding device when the bag is in the storage, and hence it is not required to attach the bag to the first holding device after moving the bag from the storing location of the bag and before moving the bag to the heater.

In some embodiments, the stored bag is closed in an airtight manner, and the food contained in the closed bag is in vacuum.

A second aspect of the disclosure is related to a method for heating food and opening a closed bag, the method comprising:
- attaching a first holding device to the closed bag; wherein the closed bag contains the food and the first holding device is for holding the closed bag;
- moving, with transporting means, the closed bag from a first location to a heater by moving the first holding device;
- heating the food contained in the bag with the heater;
- moving, with the transporting means, the closed bag from the heater to an opening location by moving the first holding device; and
- opening the bag, with an opening device, at the opening location.

In some embodiments, the method comprises providing food from the open bag to a receptacle by rotating the open bag to a position in which the opening of the bag is below a bottom of the food-containing portion of the bag.

Similar advantages as those described with respect to the first aspect of the disclosure are also applicable to the second aspect of the disclosure.

### BRIEF DESCRIPTION OF THE DRAWINGS

To complete the description and to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 shows a layout of a system for heating food and providing hot food in accordance with some embodiments of the disclosure.
Figure 2 shows a closed bag attached to a first holding device in accordance with some embodiments of the disclosure.
Figures 3 shows a bag attached to a frame of the bag in accordance with some embodiments of the disclosure.
Figure 4 shows a heater into which two closed bags are introduced in accordance with some embodiments of the disclosure.
Figure 4A shows an enlarged view of a portion of a heater in accordance with some embodiments of the disclosure.
Figure 5 shows a rotated bag in accordance with some embodiments of the disclosure.
Figure 6 shows an open bag attached to a second holding device in accordance with some embodiments of the disclosure.
Figure 6A shows a bag with alternative first holding means in accordance with embodiments of the disclosure.
Figure 7 shows an open bag in a provision location in accordance with some embodiments of the disclosure.
Figure 8 shows an open bag in a provision location and a pushing device squeezing a food-containing portion of the bag in accordance with some embodiments of the disclosure.
Figure 9 shows an open bag about to be released from a second holding device in accordance with some embodiments of the disclosure.

### DETAILED DESCRIPTION

The following description is not to be taken in a limiting sense but is given solely for the purpose of describing the broad principles of the disclosure. Embodiments of the disclosure will be described by way of example, with reference to the above-mentioned drawings.

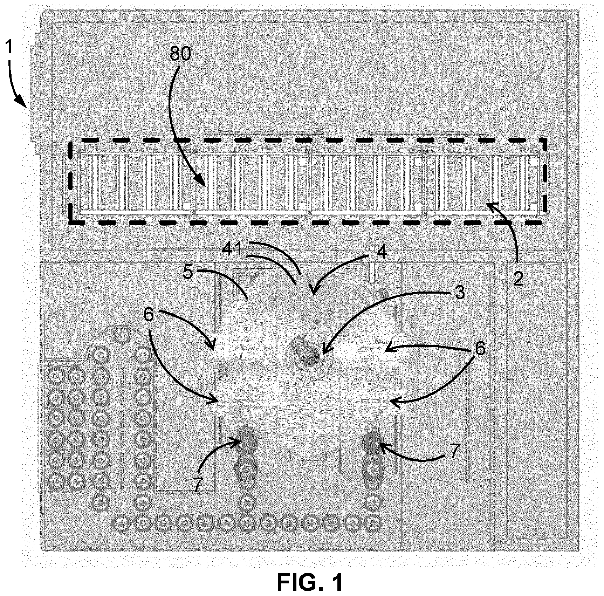

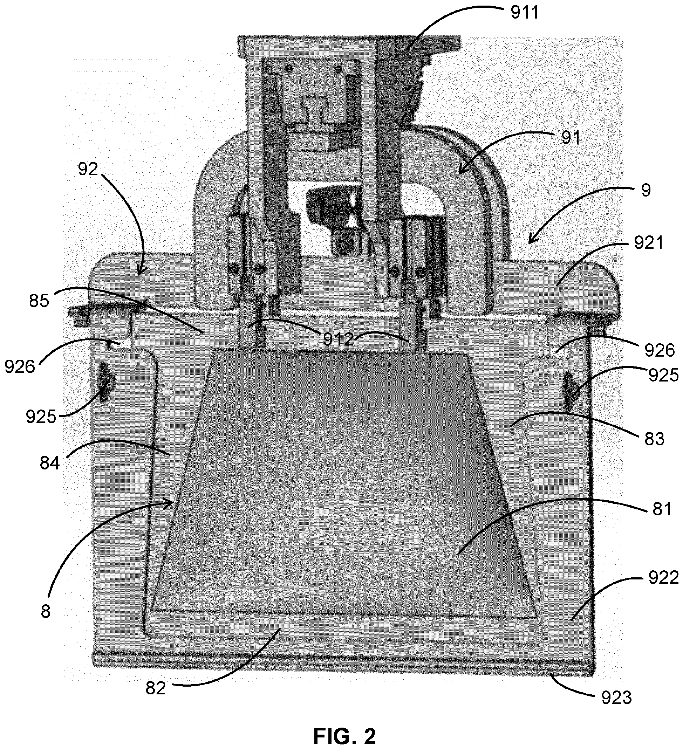

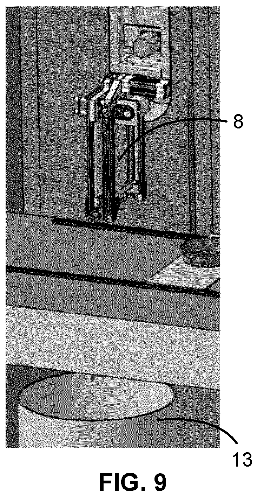

Figure 1 shows a layout of a system 1 for heating food and providing hot food. The system 1 comprises a storage 2 for storing closed bags 8, a first holding device 91 (shown in figure 2), transporting means 3, a heater 4, a second holding device 6 (figure 1 shows four second holding devices 6, although the system 1 could comprise more or less second holding devices 6), an opening device (not shown in figure 1) for opening closed bags 8, a receptacle 7 (e.g., a bowl), a container 13 (shown in figure 9) and a storage (not shown in the figures) for storing first holding devices 91.

Components of the system 1 are arranged, for example, as shown in figure 1. Arranging the storage 2 at an end of the system 1 may be advantageous for minimizing a transportation distance of each bag 8 among different components of the system 1.

A heater 4 may be between the storage 2 and a second holding device 6. In this way length of movement of the closed bag 8 from the storage 2 to the heater 4 and then to the second holding device 6 may be minimized.

Providing the heater 4 between the storage 2 and the second holding device 6 may be advantageous for minimizing a total volume of the system 1.

The storage 2 stores closed bags 8. The storage 2 may have a temperature of between 0 °C and -30°C. To keep a temperature of between 0°C and -30°C within the storage 2, the storage 2 may comprise cooling means. The storage may be, e.g., a freezer.

The closed bags 8 in the storage 2 may contain food in a refrigerated state (e.g., frozen). For example, the food contained in each bag 8 may have been cooked and subsequently refrigerated to better preserve the food. Each bag 8 in the storage 2 may contain a same or different food as another bag 8 in the storage 2. Food contained in the bags 8 may have been cooked using different types of cooking (e.g., by frying, grilling, roasting, boiling, smoking, baking, steaming, broiling, stir-frying, sautéing, poaching, pressure cooking, griddling, blanching, braising, microwaving and/or clay pot cooking). Some examples of food contained in each bag 8 are zucchini puree, fabada and a grilled or fried steak.

The food contained in the closed bags 8 may be in vacuum, and the closed bags 8 may comprise an airtight seal to keep the vacuum within each bag 8.

Each bag 8 stored in the storage 2 may be held with a first holding device 91 (see figure 2). In other embodiments, bags 8 stored in the storage 2 may be held with a device different than the first holding device 91.

Figure 2 shows a first holding device 91 attached to a closed bag 8 and holding means 912 holding a portion of the bag located above the food-containing portion 81 of the bag 8. The first holding device 91 shown in figure 2 comprises the holding means 912.

The system 1 comprises a frame 92 of the bag. The frame 92 comprises plates (e.g., two U-shaped plates 922, 923) pressed against each other while the second portion 82, the third side-portion 83 and the fourth side-portion 84 of the bag are between the plates. The U-shaped plates may be pressed against each other by means of removable pressing means, for example, by wing nuts screwed to screws (the removable means may comprise an elastic component between the nut and the frame plate closest to the nut and/or between the screw and the frame plate closest to the screw).

The frame 92 may also comprise a portion 921 above the food containing portion 81 of the bag 8. As shown in figure 2, the first holding device 91 may be attached to the bag 8 by attaching the first holding device 91 to the portion 921 of the frame 92. For example, the first holding device 91 may be attached to the portion 921 of the frame 92 by means of a protrusion and a hole 927, the hole 927 and the protrusion having complementary shapes such that the first holding device 91 is attached to the frame 92 by introducing the protrusions into the holes. The protrusion may be part of the first holding device 91 and the hole 927 may be part of the portion 921 of the frame 92, or the protrusion may be part of the portion 921 of the frame 92 and the hole 927 may be part of the first holding device 91.

The holding means 912 may comprise pressing means for pressing the portion 85 of the bag 8 located above the food-containing portion.

The holding means 912 are located above the region of the bag 8 to be cut with the blade. The holding means 912 may be provided with actuating means to control whether the holding means hold the portion 85 of the bag 8 or are open (i.e., the holding means do not hold the portion 85 of the bag). For facilitating introduction of the bag 8 in the heater 4 it may be advantageous (when the first holding device is attached to the bag via means other than the holding means) to keep the holding means 912 open during the introduction.

In some embodiments, the first holding device 91 may be a hanger (e.g., as shown in figure 2), so that the closed bag 8 hangs from the hanger. In particular, the bag 8 may be supported only by the hanger in transportation from the storage 2 to the heater 4, and from the heater 4 to the opening location.

The first holding device 91 is attachable to the transporting means 3. For example, the transporting means 3 may comprise an attaching portion attachable to a portion 911 of the first holding device 91.

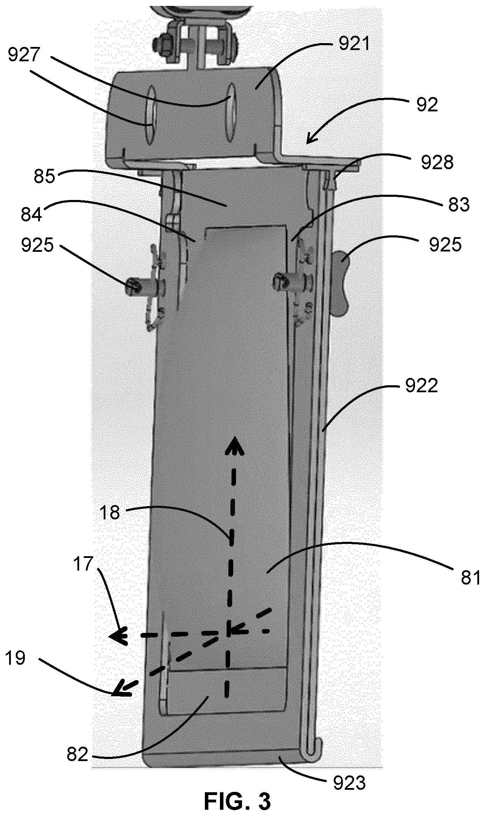

The frame 92 may comprise gaps (e.g., grooves 926) to leave a cuttable portion of the bag 8 uncovered. A blade can be introduced along the whole width of the bag 8 (figure 3 shows direction 17 of the width of the bag, which is a direction from the fourth side-portion 84 of the bag to the third side-portion 83 of the bag 8) and through the gaps to cut the cuttable upper portion of the closed bag 8. Thereby, the bag 8 becomes open by generating an opening of the bag 8.

Following with figure 2, the closed bag 8 comprises a food-containing portion 81. The food-containing portion 81 is delimited by:
- a first portion of the closed bag 8, the first portion comprising an upper portion of the closed bag 8 attachable to holding means 912 for holding a portion of the bag located above the food-containing portion of the bag;
- the second portion 82 of the bag 8 located opposite to the first portion of the closed bag 8 (e.g., a lower end of the bag);
- the third side-portion 83 (e.g., a right-side portion) of the bag 8 between the first portion of the closed bag 8 and the second portion 82 of the bag 8; and
- the fourth side-portion 84 (e.g., a left-side portion) of the bag 8 located opposite to the third side-portion 83 of the bag 8 and between the first portion 85 of the closed bag 8 and the second portion 82 of the bag 8.

As shown in figure 2, none of the first portion of the closed bag 8, the second portion 82 of the bag, the third side-portion 83 of the bag and the fourth side-portion 84 of the bag 8 contains food.

The transporting means 3 may comprise a robotic arm. The robotic arm comprises, at a movable end of the robotic arm, the attaching portion attachable to the portion 911 of the first holding device 91. In other embodiments, instead of the robotic arm, the transporting means 3 comprise other means for moving the bag 8.

The storage 2 may comprise an opening to make the bags 8 accessible to the robotic arm. For example, a bag 8 may be carried from a storage location of the bag 8 to a first location (e.g., a location close to the opening of the storage 2) at which the attaching portion of the transporting means 3 may be attached to the portion 911 of the first holding device 91 of the closed bag 8.

The transporting means 3 may comprise means for moving the bags 8 stored in the storage 2 from a storage location of the bag 8 to the first location. The means for moving the bags 8 from the storage location to the first location may comprise an attaching portion similar to the attaching portion of the transporting means 3, and the means for moving may be configured to attach the attaching portion of the means for moving to the portion 911 of the first holding device 91 holding the respective bag 8.

Once a closed bag 8 is in the first location, the attaching portion of the robotic arm is moved to the first location and is attached to the portion 911 of the first holding device 91. Then, the robotic arm moves to move the closed bag 8 from the first location to the heater 4.

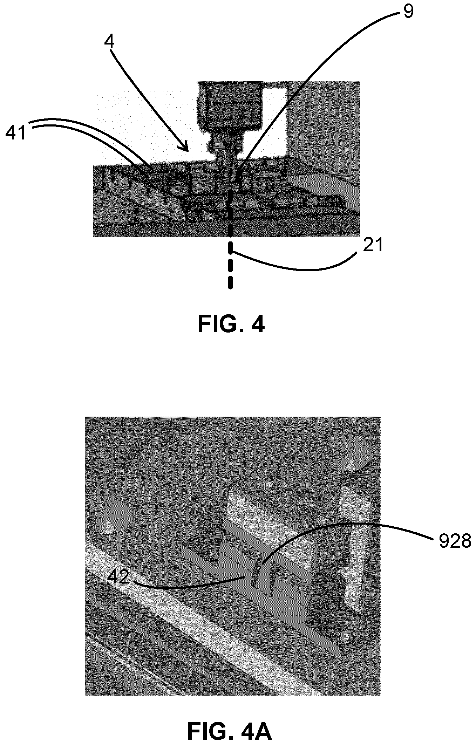

As shown in figure 4, the heater 4 comprises one or more openings 41 to access one or more pools of hot water. Figure 4 merely shows an end of the robotic arm (i.e., the rest of the robotic arm is not shown in figure 4). The robotic arm introduces the closed bag 8 into an opening 41 and submerges at least a portion of the food-containing portion 81 of the bag 8 into the hot water. For example, the portion of the bag 8 containing the food may be completely submerged in the hot water to enhance uniformity of heating of the food contained in the bag 8.

Each opening 41 may extend in a vertical direction, and each bag 8 may be vertically introduced into the opening (i.e., the first portion of the bag 8 introduced into the opening 41 is the lowermost portion of the bag 8).

A total height of the opening 41 may be greater than a total height of the food-containing portion 81 of the bag 8 to allow completely submerging the food-containing portion 81 of the bag 8 into the hot water. The direction of the height of the heater 4 is shown in figure 4 with dashed line 21. The direction of the height of the heater 4 is the same as the direction of the height of the bag 8 when the bag is introduced in the heater 4. The direction of the width of the opening 41 of the heater 4 is the same as the direction of the width of the bag 8 when the bag is introduced in the heater 4. The direction of the thickness of the opening 41 of the heater 4 is the same as the direction of the thickness of the bag 8.

An upper end of the opening 41 may comprise means for supporting the first holding device 91, for example, for supporting opposite side ends of the first holding device 91. For example, the opening 41 may comprise slots 42 at an upper end of the opening 41. Upon introducing the bag 8 into the opening 41, protrusions in opposite sides of the first holding device 91 may be introduced in the slots 42 located in sides of the opening 41, and the slots 42 may act as blocking means for preventing further introduction of the bag 8 in the opening 4 and for enhancing stability of the bag 8 while the bag is introduced in the opening 41. The pairs slot-protrusion may be arranged in an opposite manner (i.e., the slots may be provided in opposite sides of the first holding device 91 and the protrusions may be provided in sides of the opening 41).

The openings 41 may provide access to a same pool of water. In this way, several bags 8 (for example, containing different types of food) may be simultaneously heated by a same pool of hot water.

The system 1 may be configured to, after introducing the bag 8 in an opening 41, detach the attaching portion of the transporting means 3 from the portion 911 of the first holding device 91. Thereby, the attaching portion is released and can be, for example, attached to another bag 8 located, e.g., in the first location and to move the respective bag 8 to the heater 4 (e.g., to introduce the another bag in an opening 41 of the heater 4). The released attaching portion may be alternatively attached to the portion 911 of a first holding device 91 attached to another bag 8 located in the heater 4 to move the respective bag 8 out of the heater (e.g., to drying means or directly to an opening location).

The system 1 may be configured to take the bag 8 outside of the heater (e.g., outside of the pool of water) upon the bag 8 being in the heater (e.g., in the water) a determined time. The system 1 may be configured to adjust the determined time to the temperature of the heater (e.g., temperature of the water of the heater) and to the food contained in the bag 8 (e.g., to the ingredients of the food contained in the bag 8 and/or to the amount of food contained in the bag 8).

The system 1 may comprise drying means 5 for drying the bags 8 (for example, by blowing air to an outer surface of the closed bag 8). The drying means may be located between the heater 4 (e.g., an opening 41 of the heater 4) and the opening location. Thereby, a portion of the movement of the bag 8 from the heater 4 to the opening location may already take place in the movement of the bag 8 from the heater 4 to the drying means.

To take the bag 8 outside of the heater 4, the attaching portion of the transporting means 3 is attached (or remains attached) to the portion 911 of the first holding device 91 attached to the respective bag 8. Then, the transporting means 3 (e.g., the robotic arm) are moved to move the bag 8 from the heater 4 to the drying means.

The system 1 may be configured to take the bag 8 outside of the drying means upon the bag 8 being in the drying means a determined time. Since drying the bag may take just a few time, the system 1 may be configured to not to detach the attaching portion 31 of the transporting means 3 from the portion 911 of the first holding device 91 while the bag is in the drying means.

Upon drying the bag 8, the transporting means 3 move the bag 8 from the drying means to the opening location.

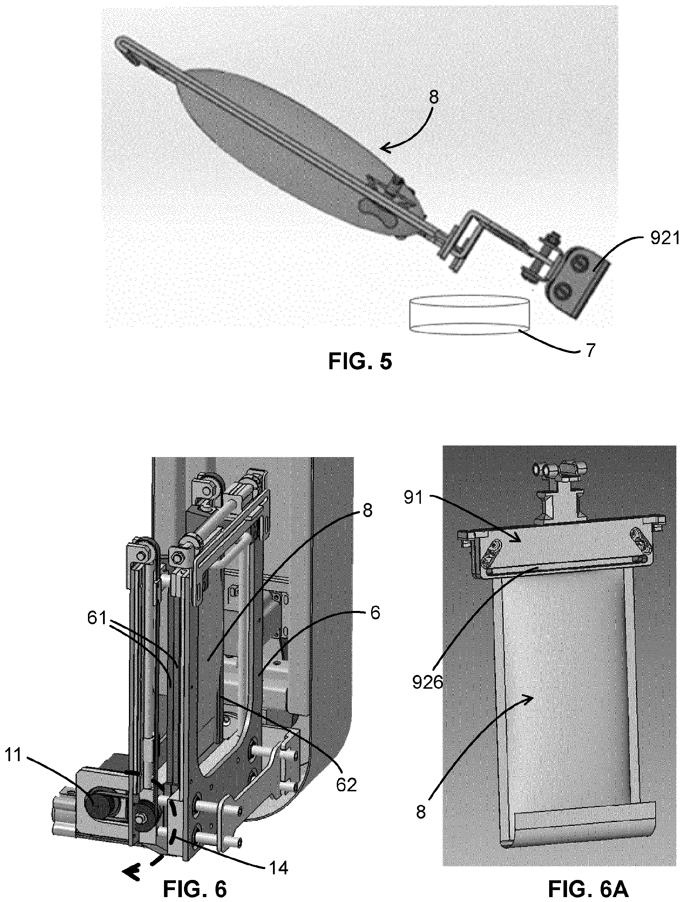

The rest of the process is explained in reference to the bag 8 shown in figure 6A and the first holding device 91 shown in figure 6A. The process may be performed in a similar manner for the bag 8 and first holding device 91 shown in figure 2.

In the opening location, a second holding device 6 is actuated. The second holding device 6 comprises first tabs 61 for holding the third side-portion 83 of the bag 8 between the first tabs 61 and second tabs 62 for holding the fourth side-portion 84 of the bag between the second tabs 62.

The first tabs 61 hold the third side-portion 83 of the bag 8 by pressing the first tabs 61 against each other while the third side-portion 83 of the bag 8 is between the first tabs 61. The first tabs 61 press a portion of the third side-portion 83 located below the first holding device 91.

The second tabs 62 hold the fourth side-portion 84 of the bag 8 by pressing the second tabs 62 against each other while the fourth side-portion 84 of the bag 8 is between the second tabs 62. The second tabs 62 press a portion of the fourth side-portion 84 located below the first holding device 91.

Thereby, the closed bag 8 is held by the first holding device 91 and by the second holding device 6.

Instead of two first tabs and two second tabs, the second holding device 6 may be provided with more first tabs and/or more second tabs. For example, the second holding device 6 may be provided with two pairs of first tabs, a first pair of first tabs may press a portion of the third side portion 83 of the bag closer to the portion of the bag to be open than to an end of the second portion 82 of the bag (i.e., a lowermost portion of the bag) and the second pair of first tabs may press the third side portion 83 of the bag closer to the lowermost portion of the bag than to the portion of the bag to be open. The second holding device 6 may be provided with two pairs of second tabs arranged similarly as the two pairs of first tabs but in the fourth side portion 84 of the bag instead of in the third side portion of the bag.

In the case of the bag 8 shown in figure 2. The first tabs 61 and the second tabs 62 hold portions of the frame 92 covering the third side portion 83 of the bag 8 and the fourth side portion 83 of the bag 8 respectively.

The system 1 is configured to, in this holding configuration of the bag 8, cut the bag 8 to separate an upper portion of the bag 8 from the rest of the bag 8, thereby generating the opening of the bag 8. The blade is introduced through a gap of the system 1 (e.g., grooves 926 of figure 2 or hole 926 of figure 6A) leaving the bag uncovered for being cut with a blade. For example, the gap may be provided in the first holding device 91 and/or in the frame 92.

A direction of the width of the opening of the bag 8 is the same as the direction of the width of the bag 8.

The portion of the bag 8 cut with the blade does not contain food. In this way, the blade does not get dirty with food contained in the respective bag 8. Thereby, the blade may be used to cut other bags 8 with different food without contaminating the food of the other bags 8 and without requiring cleaning the blade between cuts of bags 8 containing different food.

If the first holding device 91 does not comprise the holding means, the bag may be detached from the first holding device 91 prior to opening the bag.

After generating the opening of the bag 8, the holding means 912 are attached to the upper portion 85 of the bag. Since the bag 8 is still held by the holding means (in the case of figure 2, the holding means 912, and in the case of figure 6A by being pressed between plates of the first holding device 91), said upper portion of the bag 8 is carried together with the holding means. If the holding means are part of the first holding device 91, said upper portion of the bag is carried together with first holding device 91.

Prior to rotating the bag, the first holding device 91 is detached from the bag.

To introduce the first holding device 91 in the container, the portion 911 of the first holding device 91 is detached from the attaching portion of the transporting means 3, thereby releasing the attaching portion from the first holding device 91 so that the attaching portion may be attached to the first holding device 91 attached to another closed bag 8.

The holding means may open to allow removing the upper portion 85 of the bag from the holding means. Then, the holding means may be reused for another closed bag to be processed by system 1. Before reusing the holding means, the holding means may be cleaned.

The first holding device, after detaching from the bag (e.g., detaching from the frame 92), may be used for holding another closed bag to be processed by system 1. Before reusing the first holding device 91, the first holding device 91 may be cleaned.

The portion of the open bag 8 remaining in the opening location, which has an opening at an upper end of the bag 8, is rotated by a rotating device 11 while the bag 8 is held by the second holding device 6. In particular, the system 1 may be configured to actuate the rotating device 11 to rotate the bag 8 from the opening location to the provision location. The rotation may be in the direction indicated by dashed line 14.

By rotating the bag 8, the opening of the bag 8 goes from being above the second portion of the bag 8 to being below the second portion of the bag 8, so that gravity may aid in the extraction of food from the bag 8. Thereby, the bag 8 is moved from the opening location to a location (i.e., the provision location) for providing the food to a receptacle 7.

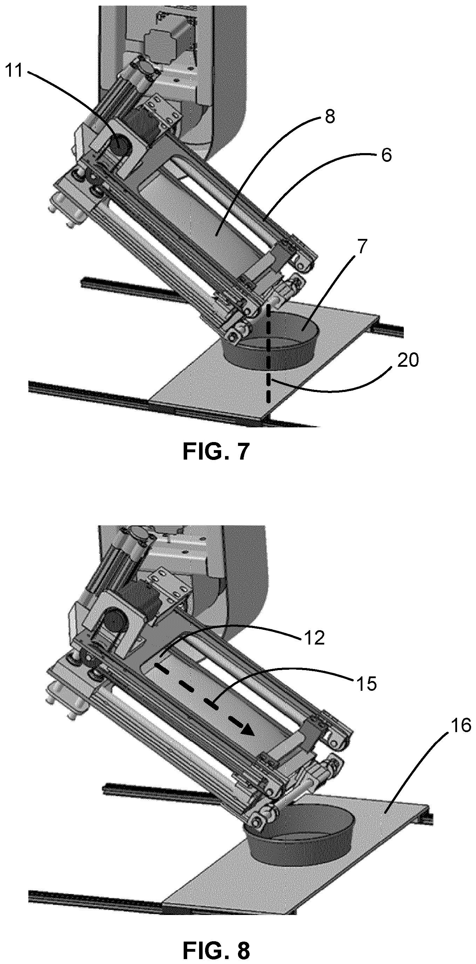

As shown in figures 7 and 8, in the provision location the opening of the bag 8 is located above a receptacle 7 to which the food contained in the bag 8 is to be provided. As shown in figures 7 and 8 the receptacle 7 may comprise an upper opening for introducing the food contained in the bag 8. The opening of the receptacle 7 may have a width (i.e., a dimension of the opening of the receptacle 7 in a direction parallel to the width of the bag 8) greater than a width of the opening of the bag 8, and the opening of the receptacle 7 may have a thickness (i.e., a dimension of the opening of the receptacle 7 perpendicular to the width of the receptacle 7 and to a depth of the receptacle 7) greater than a thickness of the opening of the bag 8. The thickness of the opening of the bag 8 is a dimension of the opening of the bag 8 extending in a direction perpendicular to the width of the bag 8 and to the height of the bag 8 (i.e., the height of the bag is a dimension of the bag 8 extending from the second portion of the bag 8 to the opening of the bag 8 and perpendicular to the width of the bag 8).

The provision location of the bag 8 shown in figure 2 is shown in figure 5.

A direction 18 of the height of the bag 8 is illustrated in figure 3.

A direction 19 of the thickness of the bag 8 is shown in figure 3.

A direction 21 of depth of the receptacle 7 is illustrated in figure 7.

The system 1 may be configured to, upon moving the bag 8 to the provision location and placing the receptacle 7 below the opening of the bag 8, actuate a pushing device 12 configured to squeeze the food-containing portion 81 of the bag while the pushing device 12 moves in a direction 15 (i.e., the direction of the height dimension of the bag 8) from the second portion 82 of the bag to the opening of the bag 8.

Thereby, as the pushing device 12 moves in the direction 15 while squeezing the bag 8, food is extracted from the bag 8 through the opening of the bag 8 and falls, through the opening of the receptacle 7, into the receptacle 7.

The pushing device 12 may comprise two plates. The pushing device 12 may squeeze the bag 8 by pressing the plates of the pushing device 12 against each other while the bag 8 is between the plates of the pushing device. While the plates of the pushing device 12 are pressed against each other, the plates may move in the direction 15 to extract the food from the bag 8.

The pushing device 12 may move in the direction 15 until contacting one or more tabs of the second holding device 6 (e.g., one or more tabs of the first tabs 61 and the second tabs 62) to maximize the amount of food extracted from the bag 8. In other words, one or more tabs of the second holding device 6 may block the movement of the pushing device 12 in the direction 15.

After introducing the food into the receptacle 7, the receptacle 7 may be moved away from the bag 8 to release the provision location for placing another empty receptacle 7 to be filled with food from another bag 8. For example, the system 1 may comprise a moveable plate 16, the receptacle 7 may be supported by the moveable plate 16, and the system 1 may be configured to move the moveable plate 16 away from the bag 8 upon the pushing device 12 completing a movement in the direction 15 (e.g., upon the pushing device 12 contacting the one or more tabs) or upon waiting a determined time after the pushing device 12 has completed the movement in the direction 15. It may be desirable to wait a determined time after completing the movement of the pushing device 12 in the direction 15 to allow time for food to leave the bag 8 (e.g., soups or other food comprising more viscous liquids may keep dripping through the opening of the bag after the pushing device 12 has completed the movement in the direction 15).

After moving the receptacle 7 away from the provision location, the rotating device 11 may further rotate the bag 8 in the direction 14 to lower a position of the opening of the bag 8 with respect to the second portion of the bag 8 (e.g., to a position forming an angle of 180° degrees with respect to the position of the bag 8 while the bag 8 is cut with the blade). For example, the system 1 may be configured to, after moving the receptacle 7 away from the bag, rotate the bag 8 by actuating the rotating means 11 to lower a position of the opening of the bag 8 with respect to the second portion of the bag 8.

After further rotation of the bag 8, as shown in figure 9, the system 1 may be configured to release the bag 8 from the second holding device 6 by releasing the pressure between the first tabs 61 and the pressure between the second tabs 62. Thereby, the bag 8 may fall from the second holding device 6. For example, the bag 8 may fall into a container 13.

The bag 8, if made of appropriate materials, may thereafter be recycled.

The system 1 may comprise processing means (e.g., one or more processors) to control electromechanical components of the system 1, such as, the cooling means of the storage 2, the means for moving the bag within the storage 2, the transporting means 3, the heater 4, the drying means 5, the second holding device 6, the holding means 912, the rotating device 11 and the moveable plate 16.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the disclosure as defined in the claims.

## Claims

1. A system (1) comprising:
- a closed bag (8) containing food;
- a first holding device (91) for holding the closed bag (8), the first holding device (91) being attachable to the closed bag (8);
- a heater (4) for heating the food while the food is inside the closed bag (8);
- transporting means (3) configured to move, by moving the first holding device (91), the closed bag (8) from a first location to the heater (4), and from the heater (4) to an opening location for opening the bag; and
- an opening device configured to open the bag (8) at the opening location.

2. The system (1) of claim 1, the system comprising a second holding device (6) for holding the open bag (8).

3. The system (1) of claim 2, the system comprising a rotating device (11) for rotating the open bag (8); wherein the system (1) is configured to rotate the open bag (8), with the rotating device (11), while the second holding device (6) is holding the bag (8).

4. The system (1) of any one of the previous claims, wherein the system (1) comprises holding means (912) for holding a portion of the bag located above a food-containing portion of the bag; preferably wherein the first holding device (91) comprises the holding means (912).

5. The system (1) of any one of the previous claims, wherein the opening device is a cutting device comprising a blade for cutting the closed bag (8);
wherein the system is configured to, when holding the bag (8) with the first holding device (91) at the opening location, leave a cuttable portion of the bag (8) uncovered for being cut with the blade.

6. The system (1) of any one of the previous claims, wherein the heater (4) comprises water at a temperature of at least 80 °C and at most 100°C and openings (41) above the water, wherein the bag (8) has dimensions such that the bag (8) can be introduced in the water through any one of the openings (41); each opening (41) of the openings preferably having a width of at least 0.05 m and at most 0.60 m and a thickness of at least 0.01 m and at most 0.10 m.

7. The system (1) of any one of the previous claims, the system comprising drying means for drying the bag (8); and wherein the transporting means (3) are configured to move the bag (8) from the heater (4) to the drying means and from the drying means to the opening location.

8. The system (1) of any one of the previous claims, the system (1) comprising a storage for storing the first holding device (91), wherein the transporting means (3) are configured to move the first holding device (91) from the opening location to the storage for storing the first holding device (91).

9. The system of claim 2 or of any one of claims 3-8 when depending on claim 2, the closed bag (8) comprising a food-containing portion (81), the food-containing portion (81) being delimited by:
- a first portion of the closed bag (8), the first portion comprising an upper portion of the closed bag (8) attachable to holding means (912) for holding a portion of the bag located above the food-containing portion of the bag;
- a second portion (82) of the bag (8) located opposite to the first portion of the closed bag (8);
- a third side-portion (83) of the bag (8) between the first portion of the closed bag and the second portion (82) of the bag (8); and
- a fourth side-portion (84) of the bag (8) located opposite to the third side-portion (83) of the bag (8) and between the first portion of the closed bag and the second portion of the bag (8);
wherein the second holding device (6) comprises tabs for holding at least two of the second portion (82), the third side-portion (83) and the fourth side-portion (84) of the bag between the tabs.

10. The system (1) of any one of the previous claims, the system comprising a receptacle (7), wherein the system is configured to provide the food from the bag (8) to the receptacle (7) at a provision location of the bag (8);
preferably wherein:
the rotating device (11) is configured to rotate the open bag (8) to the provision location;
and, upon rotation of the bag to the provision location, an opening of the bag is below the second portion of the bag.

11. The system (1) of any one of the previous claims, the receptacle (7) comprising an opening for receiving the food from the bag (8), the opening of the receptacle (7) having a width greater than a width of an opening of the bag (8), and the opening of the receptacle (7) having a thickness greater than a thickness of the opening of the bag (8).

12. The system (1) of any one of the previous claims, the system comprising a pushing device (12), and the system being configured to, at the same time, squeeze, with the pushing device, a food-containing portion (81) of the bag and move the pushing device (12) in a direction from the second portion (82) of the bag to an opening of the bag (8).

13. The system (1) of any one of the previous claims, the system comprising a waste container (13); preferably wherein the waste container (13) is located below a provision location of the bag, the provision location being for providing the food from the bag (8) to a receptacle (7).

14. The system (1) of any one of the previous claims, the system comprising a storage (2), bags (80) and cooling means, wherein the storage (2) stores the bags (80), wherein each bag (80) of the bags contains food, and wherein the cooling means are configured to keep a temperature of at least -30 °C and at most 0 °C within the storage (2); preferably wherein each bag (80) of the bags is held by a first holding device (91).

15. A method for heating food and opening a closed bag, the method comprising:
- attaching a first holding device (91) to the closed bag (8); wherein the closed bag (8) contains the food and the first holding device (91) is for holding the closed bag (8);
- moving, with transporting means, the closed bag (8) from a first location to a heater (4) by moving the first holding device (91);
- heating the food contained in the bag (8) with the heater (4);
- moving, with the transporting means, the closed bag (8) from the heater (4) to an opening location by moving the first holding device (91); and
- opening the bag (8), with an opening device, at the opening location.
